# EUROPEAN PATENT SPECIFICATION

(11) **EP 0 577 174 B1**
(45) Date of publication and mention of the grant of the patent: **15.05.1996**
(21) Application number: 93201703.1
(22) Date of filing: 14.06.1993
(51) Int. Cl.: F16D 48/04, F16H 61/06

(54) **Transmission apparatus**
Einrichtung zur Kraftübertragung
Appareil de transmission

(30) Priority: 24.06.1992 US 903403
(43) Date of publication of application: 05.01.1994
(73) Proprietor: GENERAL MOTORS CORPORATION, Detroit Michigan 48202 (US)
(72) Inventor: Malloy, John Dennis, Troy, Michigan 48098 (US)
(74) Representative: Denton, Michael John

(56) References cited:
- DE-A- 1 650 692
- FR-A- 2 283 341
- US-A- 4 274 308

## Description

This invention relates to transmission apparatus.

In prior art transmissions, an accumulator is utilised to provide for the proper pressure time interval during a speed change to provide the least disturbance during a shift transient. The accumulators have historically been utilised only to control the on-coming friction device, which is generally a disc type fluid operated structure. The friction device may be a clutch or a brake. In control terminology the disc-type fluid operated structure is generally referred to as a clutch during a discussion of a ratio interchange, and in this specification the term 'clutch' is to be interpreted accordingly. The off-going friction device is generally permitted to exhaust freely and the accumulator control is usually removed from the exhausting circuit and exhausted either separately or through a separate restricted passage, such that the accumulator has no affect on the off-going device.

These systems would let the engine accelerate freely to the new speed requirement for the on-coming gearing ratio. If the ratio interchange or transition is made on to a freewheeler rather than a friction device, the shift timing will be correct and the shift quality will be fairly smooth. However, it would be more economical if the off-going friction member could be controlled or otherwise modulated at a desired disengagement rate during the ratio interchange. This is particularly important in what is known as a clutch-to-clutch type shift where time is required and some action has to be taken to apply the on-coming clutch at synchronisation while releasing the off-going clutch.

To obtain satisfactory shift quality, it has been proposed that pulse-width modulated solenoid valves be utilised to control both the on-coming and off-going clutch or friction devices. This requires sufficient electronic control and electronic control unit capabilities to permit the independent control of the pressure at each friction device. While these devices do provide for good shift quality, they also increase the cost of the transmission controller.

In US Patent No. 4,274,308 there is disclosed an automatic transmission apparatus which includes a shock control arrangement in the hydraulic control system. The shock control arrangement comprises a pressure accumulator which takes up fluid pressure being applied to fluid operated clutches during various operational conditions of the transmission. These conditions include selection of the forward drive range, selection of reverse gear, and upshift between first and second gear in the forward drive range. The threshold pressure at which the pressure accumulator commences taking up pressure is varied with engine load by using the main line pressure, as applied to the fluid operated clutches, in the pressure accumulator in such manner as to oppose the clutch-actuating fluid pressure. This is achieved by providing the pressure accumulator with a fluid-operated piston having different first, second and third effective pressure surface areas which are variously exposed to pressure fluid depending on which clutches are being operated to provide the shift or gear ratio required at any instant.

The present invention seeks to provide improved transmission apparatus.

According to an aspect of the present invention, there is provided transmission apparatus as specified in claim 1.

The present invention can provide transmission apparatus in which a friction device may cooperate with an accumulator operative both during on-coming and off-going states of a ratio interchange.

A preferred embodiment provides an accumulator within a clutch actuation circuit which can provide a pressure-time relationship during engagement and disengagement useful in controlling shift quality during a ratio interchange. The accumulation effect during engagement and disengagement can be accomplished by changing an effective area of the accumulator which is sensitive to clutch pressure between upshift and downshift interchanges. The area utilised during these two conditions may have a ratio substantially equal to the ratio of the on-coming and off-going speed ratios.

In the preferred embodiment of the invention, this may be accomplished by utilising one area during clutch engagement and both that area and a second area during clutch disengagement. This can be accomplished by exhausting the secondary area during clutch upshifting and then interconnecting the two areas during downshifting. This area interconnection can be accomplished during the shift valve which is already available to provide pressure direction to and from the friction device during ratio interchange.

In prior art accumulator-assisted controllers, it is known simply to exhaust the accumulator through a large restriction, thereby effectively removing it as a timing device, or to exhaust the accumulator separately, which again removes the timing device. The present invention, however, can utilise the accumulator function during a ratio interchange while a friction device is being disengaged.

The invention may provide in some embodiments a clutch engagement controller with a single accumulator operable to control the rate of change of pressure at a clutch piston during both engagement and disengagement.

Advantageously, there may be provided an accumulator and controller for a friction torque device in which a first accumulator chamber is pressurised and filled during an engagement cycle of the friction torque device and in which both the first chamber and a second chamber are pressurised and exhausted during a disengagement cycle of the friction device.

In an embodiment a bias pressure acts in a bias chamber in opposition to the first and second chambers, a spring member being disposed in one of the first and second chambers for exerting a force in opposition to the pressure in the bias chamber.

In another embodiment, a first area is pressurised during engagement, the first and a second area being pressurised during disengagement, wherein the ratio of the first area to the sum of the first and second areas is substantially equal to the ratio of the off-going gear ratio to an on-coming gear ratio.

An embodiment of the present invention is described below, by way of illustration only, with reference to the accompanying drawings, in which:
Figure 1 is a diagrammatic representation of a portion of an embodiment of transmission control circuit and fluid operated friction device;
Figure 2 is a graph of pressure against time for the friction device during a ratio change in both an on-coming condition and an off-going condition.

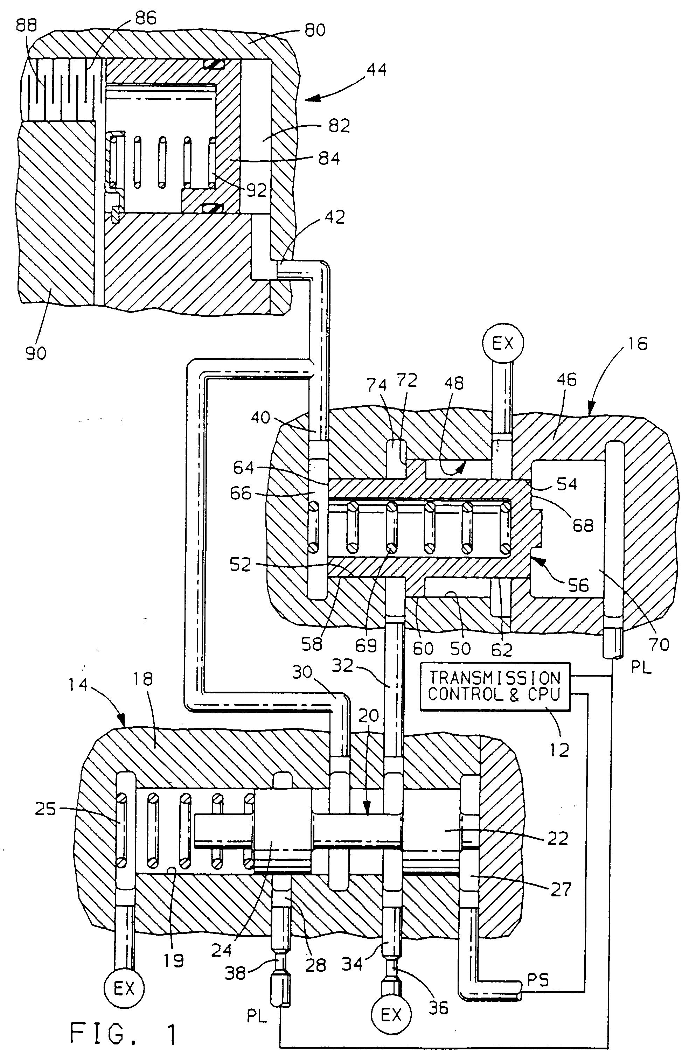

Referring to Figure 1, a transmission controller includes a main control box 12 which houses a control pump, a plurality of conventional control valves, such as shift valves and timing valves, and is controlled by an electronically programmed central processing unit. The transmission controller 12 has a pair of output pressure lines, one of which is pressurised at a line pressure value (PL) and the other of which is controlled to be pressurised to establish a shift control pressure (PS).

The transmission controller 12 is connectable to a shift valve assembly 14 through the shift control pressure PS and to an accumulator 16 through the line pressure PL. The line pressure PL is also connected to the shift valve assembly 14.

The shift valve assembly 14 includes a valve body 18 within which is formed a valve bore 19. A valve spool 20, having spaced valves 22 and 24, is slidably disposed in the valve bore 19 and urged to one end thereof by a spring member 25. The valve 22 cooperates with the bore 19 to form a shift control chamber 27, which is disposed in fluid communication with the shift control pressure PS. In the spring set or downshifted position shown, the valve 22 effectively closes the line pressure passage at a port 28, while the space between valves 22 and 24 opens a clutch passage 30 and a downshift accumulator passage 32 to an exhaust port 34, which is connected through a restriction 36 to the transmission sump, not shown.

When the chamber 27 is exposed to shift pressure PS by the controller 12, the valve spool 20 will move leftwardly as viewed in Figure 1 against the spring 25 until the port 28 is in fluid communication with passage 30 and the passage 32 is blocked from fluid communication with the passage 30 by the valve 22. This is the upshifted or pressure set condition of the valve assembly 14. When this condition occurs, line pressure PL is directed through a restriction 38 to the port 28 and thence to the passage 30, which is in fluid communication with an upshift port 40 on the accumulator 16 and to a clutch inlet or control port 42, which is formed in a conventional fluid operated friction device 44.

The accumulator 16 includes a body portion 46 within which is formed a multi-stepped bore 48. The bore 48 has a large diameter bore portion 50 and two smaller diameter bore portions 52 and 54. The smaller diameter portion 52 is preferably of greater diameter than the portion 54. An accumulator piston 56 is slidably disposed in the bore 48 and has three different diameter portions 58, 60 and 62 which are respectively slidably received in the bores 52, 50 and 54.

The piston 56 has one end 64 which cooperates with one end of bore 48 to form an upshift chamber 66, a second end 68 which cooperates with the other end of valve bore 48 to form a bias chamber 70 and an intermediate differential area 72 formed by the piston portions 60 and 58 and cooperating with the bore 48 to form a downshift chamber 74. The upshift chamber 66 is in fluid communication with the passage 30 and the downshift chamber 74 is in fluid communication with the passage 32. The accumulator 16 also includes a spring member 69 which is disposed between one end of bore 48 and the piston 56. The spring 69 imposes a force on the piston 56 in a direction to overcome fluid pressure in the bias chamber 70 and therefore to urge the accumulator piston 56 to the right as viewed in Figure 1.

As will be apparent from Figure 1, when the shift valve 14 is in the downshift position the chambers 66 and 74 are interconnected between the valves 22 and 24, while in the upshift position the port 28 and passage 30 are in fluid communication with the upshift chamber 66 and the downshift chamber 74 is connected to exhaust 34.

The fluid operated friction device 44 is a disc-type device having a housing 80 within which is formed an annular chamber 82 which slidably supports an annular piston 84. The chamber 82 is in fluid communication through port 42 with the passage 30. The friction device 44 includes a plurality of conventional friction discs 86 which are splined in a well known manner to the housing 80, and a plurality of friction discs 88 which are splined in a well known manner to an output hub 90.

As is well known, the output hub 90 is generally connected to a gear member in a planetary gear arrangement or in an automatic shifting-type countershaft transmission. The housing 80 is generally either a rotating member connected to a transmission input shaft or a stationary member connected to the transmission housing.

The friction device 44 can therefore be a clutch or a brake. In control terminology the disc-type device is generally referred to as a clutch during a discussion of a ratio interchange, the interchange between disc-type friction devices generally being referred to as a clutch-to-clutch shift.

When the chamber 82 is pressurised, the piston 84 moves against a plurality of return springs 92 until the friction discs 86 and 88 are urged into frictional abutment. During this portion of the piston movement, there is no work being accomplished or torque transmitting reaction being established by the friction device 44. This is generally known as the clutch takeup time in which the return springs 92 are compressed to permit the beginning of clutch engagement.

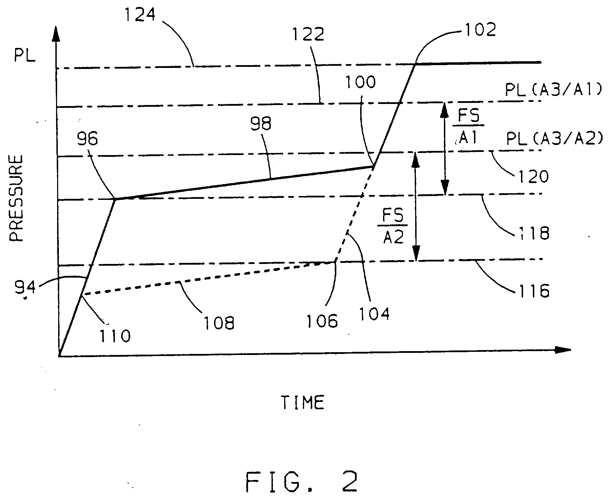

When an upshift is commanded by the transmission controller 12, the pressure in passage 30 will increase along line 94 of the graph shown in Figure 2 until point 96 is reached. At the point 96 on the curve, the pressure is sufficient in the chamber 66, along with the cooperation of spring 69, to overcome the pressure in bias chamber 70 and cause the piston 56 to begin to move to the right in the view of Figure 1. While the accumulator piston 56 is moving and the chamber 66 is increasing in size, the pressure rise in the passage 30 and therefore in chamber 82 will be delayed, as represented by the line 98 in the pressure/time graph of Figure 2.

During this time, the accumulator 16 is being filled and the clutch 44 is being engaged under a slipping condition until sufficient clutch capacity is attained to carry the full torque of the on-coming ratio. When the accumulator piston 56 reaches the end of its stroke, point 100 on the graph of Figure 2 is reached and a rapid increase in the pressure in chamber 82 occurs until line pressure is achieved at point 102. Thus, the upshift pressure of the on-coming friction device is controlled in an accumulator-assisted manner.

When a downshift or ratio change interchange is commanded by the transmission controller 12, the friction device 44 is disengaged while another friction device within the transmission is being engaged.

When a shift disengaging the device 44 is signalled by the shift valve assembly 14, that is the valve assembly is moved to the spring set position shown in Figure 1, the pressure in chamber 82 rapidly decreases along line 104 of the graph of Figure 2 to the point 106. At this point 106, the pressure in chamber 74 and in chamber 66, along with the force of spring 69, are at a level where the fluid pressure in the bias chamber 70 will begin moving the piston 56 towards the left as viewed in Figure 1. Thus, the additional fluid which must be exhausted through the valve 14, as represented by the chambers 74 and 66, will cause the pressure/time relationship to pass along line 108 of Figure 2. The slope of the line 108 is controlled by the bias pressure and the size of the restriction 36.

When the accumulator 16 has stroked sufficiently to exhaust the chambers 74 and 66, point 110 will be reached in Figure 2, after which the pressure in the chamber 82 will rapidly drop along the line 94.

Figure 2 shows a plurality of lines in phantom which are parallel to the time axis, namely lines 116, 118, 120, 122 and 124. The uppermost line 124 represents the value of line pressure PL. The lowermost line 116, which passes through point 106, represents the pressure value in the chamber 82 at which the friction device 44 has sufficient pressure to provide reaction during a downshift. This is the pressure to which the off-going friction device is held during the disengagement. This pressure is held long enough to ensure that speed change is complete before the off-going device is fully released. The line 118 passes through the point 96 which is the pressure value at which the on-coming friction device has sufficient torque capacity to establish the on-coming gear ratio.

The ratio between the on-coming and off-going gear ratios (R1/R2) is equal to the ratio of the pressures at points 96 and 106. The line 120 represents the pressure required or the pressure equal to the spring force (FS) divided by the area of the portion 72. This pressure would include the reactionaries of chambers 74 and 66 in the accumulator. The line 122 represents the amount of pressure above the line 118 produced by the spring force divided by the area of the end 64. Thus, the line pressure (PL) 122 represents line pressure times area three (A3) divided by area one (A1). A3 is the area of the end 68, the bias end of the accumulator 16. The line 120 represents a pressure value equal to line pressure PL times area three (A3) divided by area two (A2). A2 is the area of the accumulator 16 during the downshift portion of the timing cycle. A1 is the area of the upshift portion of the accumulator 16 during the timing cycle.

It will be evident that the ratio of the area two to area one is also equal to the ratio of the gear ratios before and after the interchange (A1/A2 = R1/R2). Since the accumulator 16 more nearly matches the pressure requirements for the friction device during the off-going timing cycle, the shift transients are removed and the shift becomes much smoother and more comfortable to the driver. With the improved accumulator control, a more ideal pressure control for both upshift and downshift occurs, and this will maintain the control throughout the required time interval necessary to complete the shift or the ratio interchange. This can ensure the consistency of the shift quality.

## Claims

1. Transmission apparatus comprising a clutch (44) (as hereinbefore defined); a source (12) of fluid pressure; a control valve assembly (14) for selectively operatively supplying pressurised fluid to and for exhausting fluid from the clutch; and an accumulator (16) disposed between the control valve assembly and the clutch for controlling the rate of change in pressure at the clutch between first predetermined pressure limits during pressurisation of the clutch for a predetermined time and between second predetermined pressure limits during exhaustion of the clutch for a predetermined time; the accumulator comprising a first chamber (66), a second chamber (74) and a bias chamber (70); characterised in that the first chamber (66) is subjected to pressure during both clutch pressurisation and exhaustion, the second chamber (74) is subjected to pressure only during clutch exhaustion, and the bias chamber (70) is pressurised during clutch pressurisation and exhaustion in opposition to pressure in the first chamber and during clutch exhaustion in opposition to pressure in both the first and second chambers.

2. Transmission apparatus according to claim 1, comprising spring means (69) acting on the accumulator (16) in opposition to pressure in the bias chamber (70).

3. Transmission apparatus according to claim 1 or 2, wherein the clutch includes a fluid operated friction device, the control valve assembly being adapted to supply pressurised fluid to the fluid operated friction device during the establishment of a first drive ratio (R1) and to exhaust fluid from the fluid operated friction device during the establishment of a second drive ratio (R2); the first chamber (66) having an area (Al) subjected to pressure during both pressurisation and exhaustion of the fluid operated friction device, the second chamber (74) having an area (A2) subjected to pressure only during exhaustion of the fluid operated friction device, the ratio of the area (A1) of the first chamber to the sum of the areas (A1,A2) of the first and second chambers being substantially equal to the ratio of the first drive ratio (R1) to the second drive ratio (R2).

## Patentansprüche

1. Getriebevorrichtung mit einer Kupplung (44) (wie vorstehend definiert), einer Quelle (12) von Fluiddruck, einer Steuerventilanordnung (14), um selektiv wirksam unter Druck gesetztes Fluid der Kupplung zuzuführen und Fluid von dieser abzulassen, und einem Akkumulator (16), der zwischen der Steuerventilanordnung und der Kupplung angeordnet ist, um die Druckänderungsrate an der Kupplung zwischen ersten vorbestimmten Druckgrenzen während des Unterdrucksetzens der Kupplung für eine vorbestimmte Zeit und zwischen zweiten vorbestimmten Druckgrenzen während des Entleerens der Kupplung für eine vorbestimmte Zeit zu steuern, wobei der Akkumulator eine erste Kammer (66), eine zweite Kammer (74) und eine Vorspannkammer (70) umfaßt,
dadurch **gekennzeichnet,**
daß die erste Kammer (66) sowohl während des Unterdrucksetzens als auch des Entleerens der Kupplung Druck ausgesetzt ist, die zweite Kammer (74) lediglich während des Entleerens der Kupplung Druck ausgesetzt ist, und die Vorspannkammer (70) während des Unterdrucksetzens und des Entleerens der Kupplung entgegengesetzt zu dem Druck in der ersten Kammer und während des Entleerens der Kupplung entgegengesetzt zu dem Druck sowohl in den ersten als auch zweiten Kammern unter Druck gesetzt ist.

2. Getriebevorrichtung nach Anspruch 1,
mit Federmitteln (69), die auf den Akkumulator (16) entgegengesetzt zu dem Druck in der Vorspannkammer (70) wirken.

3. Getriebevorrichtung nach Anspruch 1 oder 2,
worin die Kupplung eine fluidbetriebene Reibungseinrichtung umfaßt, wobei die Steuerventilanordnung ausgelegt ist, unter Druck gesetztes Fluid der fluidbetriebenen Reibungseinrichtung während des Errichtens eines ersten Antriebsverhältnisses (R1) zuzuführen und Fluid von der fluidbetriebenen Reibungseinrichtung während des Errichtens eines zweiten Antriebsverhältnisses (R2) abzulassen, die erste Kammer (66) eine Fläche (A1) aufweist, die sowohl während des Unterdrucksetzens als auch Entleerens der fluidbetriebenen Reibungseinrichtung Druck ausgesetzt ist, die zweite Kammer (74) eine Fläche (A2) aufweist, die lediglich während des Entleerens der fluidbetriebenen Reibungseinrichtung Druck ausgesetzt ist, und das Verhältnis der Fläche (A1) der ersten Kammer zur Summe der Flächen (A1, A2) der ersten und zweiten Kammern im wesentlichen gleich dem Verhältnis des ersten Antriebsverhältnisses (R1) zum zweiten Antriebsverhältnis (R2) ist.

## Revendications

1. Appareil de transmission comprenant un embrayage (44) (tel que défini ci-après) ; une source (12) de pression de fluide ; un ensemble (14) à vanne de commande destiné à alimenter fonctionnellement de manière sélective le fluide sous pression vers l'embrayage et à évacuer ledit fluide de cet embrayage ; et un accumulateur (16) disposé entre l'ensemble à vanne de commande et l'embrayage de manière à commander la vitesse de changement de pression dans l'embrayage entre des premières limites de pression prédéterminées au cours de la mise sous pression de l'embrayage pendant une durée prédéterminée et entre des deuxièmes limites de pression prédéterminées au cours de l'évacuation de l'embrayage pendant une durée prédéterminée ; l'accumulateur comprenant une première chambre (66), une deuxième chambre (74) et une chambre d'équilibrage (70) ; caractérisé en ce que la chambre (66) est soumise à une pression à la fois pendant la mise sous pression et l'évacuation de l'embrayage, la deuxième chambre (74) est soumise à une pression seulement pendant l'évacuation de l'embrayage, et la chambre d'équilibrage (70) est mise sous pression pendant la mise sous pression et l'évacuation de l'embrayage en opposition à la pression dans la première chambre et pendant l'évacuation de l'embrayage en opposition à la pression à la fois dans les première et deuxième chambres.

2. Appareil de transmission selon la revendication 1, comprenant des moyens élastiques (69) agissant sur l'accumulateur (16) en opposition à la pression de la chambre d'équilibrage (70).

3. Appareil de transmission selon la revendication 1 ou 2, dans lequel l'embrayage comprend un dispositif à friction à commande hydraulique, l'ensemble à vanne de commande étant adapté pour alimenter un fluide sous pression vers le dispositif à friction à commande hydraulique au cours de l'établissement du premier rapport d'entraînement (R1) et pour évacuer le fluide du dispositif à friction à commande hydraulique au cours de l'établissement du deuxième rapport d'entraînement (R2) ; la première chambre (66) possédant une surface (A1) soumise à la pression à la fois pendant la mise sous pression et l'évacuation du dispositif à friction à commande hydraulique, la deuxième chambre (74) possédant une surface (A2) soumise à la pression seulement au cours de l'évacuation du dispositif à friction à commande hydraulique, le rapport de la surface (A1) de la première chambre sur la somme des surfaces (A1, A2) des première et deuxième chambres étant sensiblement égal au rapport du premier rapport d'entraînement (R1) sur le deuxième rapport d'entraînement (R2).
